# EUROPÄISCHE PATENTSCHRIFT

(11) **EP 2 692 504 B1**
(45) Veröffentlichungstag und Bekanntmachung des Hinweises auf die Patenterteilung: **02.11.2016**
(21) Anmeldenummer: 13176599.2
(22) Anmeldetag: 16.07.2013
(51) Int. Cl.: B29C 45/14, B29C 51/42

(54) **Integrierte Kontaktheizung für thermoplastisch gebundene Matten im Spritzgießwerkzeug**
Integrated contact heating for thermoplastically bonded mats in an injection moulding tool
Chauffage de contact intégré pour des tapis liés par thermoplastie dans un outil de moulage par injection

(30) Priorität: 30.07.2012 DE 102012106936
(43) Veröffentlichungstag der Anmeldung: 05.02.2014
(73) Patentinhaber: International Automotive Components Group GmbH, 40472 Düsseldorf (DE)
(72) Erfinder: Meindl, Wolfgang, 85570 Markt Schwaben (DE)
(74) Vertreter: Liesegang, Eva

(56) Entgegenhaltungen:
- EP-A1- 0 547 703
- EP-A1- 2 327 528
- EP-A2- 1 970 192
- EP-A2- 2 113 448
- DE-A1- 10 105 591
- DE-A1-102011 014 989
- DE-C1- 10 034 518
- GB-A- 1 544 917
- GB-A- 2 353 246
- US-A1- 2005 258 559

## Beschreibung

### GEBIET DER ERFINDUNG

Die Erfindung betrifft eine Vorrichtung und ein Verfahren zur Herstellung eines Verbundteils, das eine geformte Platte und wenigstens ein an die geformte Platte angeformtes Kunststoff-Funktionsteil aufweist.

### HINTERGRUND DER ERFINDUNG

Die Erfindung ist zum Beispiel anwendbar auf die Herstellung von Verbundbauteilen, die einen Grundkörper oder Träger aus einer Faserverbundmatte aufweisen, an den Funktionsteile aus Kunststoff, wie Rippen, Halteelemente, Verstärkungselemente oder Befestigungselemente, angespritzt sind. Solche Verbundbauteile kommen z. B. in der Automobiltechnik als Innenverkleidungsteile zum Einsatz. Die Verbundbauteile werden in speziellen Press-Spritzgieß-Werkzeugen hergestellt, in denen zunächst die Faserverbundmatte in Form gepresst und verdichtet wird und anschließend die Funktionsteile aus Kunststoff angespritzt werden. Vor dem Verformen der Faserverbundmatte muss diese auf eine definierte Arbeitstemperatur gebracht werden. Im Stand der Technik ist es bekannt, hierzu separate Heizpressen mit einer Kontaktheizung oder Infrarotheizungen zu verwenden. Ein Vorteil einer Kontaktheizung ist, dass hierin eine gewisse Vorverdichtung der Faserverbundmatte erreicht werden kann.

Selbstverständlich ist die Erfindung auch anwendbar auf andere Arten von Verbundteilen, die geformte Platten aus anderen Materialien aufweisen, zum Beispiel Kunststoffplatten ohne Faseranteil, Platten mit einem Sandwich-Aufbau etc. Ferner ist die Erfindung auch anwendbar auf Verbundteile, an welche die Kunststoff-Funktionsteile auf andere Weise angeformt sind, beispielsweise durch Schäumen, Gießen oder dergleichen.

DE 10 2004 054 228 A1 beschreibt ein Verfahren und eine Vorrichtung zum Herstellen eines Formteils aus einer Naturfasermatte, mit angeformten Kunststoff-Funktionsteilen. Gemäß dem Verfahren wird zunächst der naturfaser-haltige Plattenrohling erwärmt; anschließend wird das Formteil aus dem Rohling durch Pressen geformt, und eine Kunststoffschmelze wird an das Formteil angespritzt, um die Funktionsteile anzuformen. Hierzu wird an dem Formteil vor dem Anspritzen eine Kavität gebildet. Ein ähnliches Verfahren in der EP 1 986 835 B1 beschrieben.

Ein weiteres ähnliches Verfahren, bei dem eine Platte aus thermoplastischem Material verwendet wird, ist in der EP 1 153 725 B1 beschrieben. Die EP 1 495 850 B1 beschreibt ebenfalls ein Verfahren und eine Vorrichtung zum Herstellen eines Verbundbauteils auf der Grundlage einer Platte aus thermoplastischem Material, wobei gemäß diesem Verfahren die Platte in dem Formwerkzeug selbst vorgewärmt wird, bevor Kunststoff-Funktionsteile angespritzt werden.

Weitere Schriften, welche die Herstellung von Verbundbauteilen auf der Grundlage von Fasermatten mit angespritzten Kunststoff-Funktionsteilen beschreiben, sind beispielsweise DE 10 2010 052 180 A1, DE 10 2011 014 538 B3 und DE 102011 054 152 A1.

Eine Etagenpresse zum Aufheizen von Formteilen bzw. Formteilrohlingen, die dann in einem der oben beschriebenen Press-Spritzgieß-Werkzeuge weiterverarbeitet werden können, ist beispielsweise in der EP 1 970 192 A1 beschrieben.

Die US 2005/258 559 A1 beschreibt eine Vorrichtung und ein Verfahren zum Herstellen eines Formteils, in denen zunächst in einem ersten Werkzeugteil ein Plattenrohling erwärmt und verformt wird und dann in einem zweiten Werkzeugteil das Formteil durch Anspritzen von Kunststoffmasse vervollständigt wird. Ähnlicher Stand der Technik ist in der DE 100 34 518 C1 und der EP 2 327 528 A1 beschrieben.

Die GB 2 353 246 A beschreibt eine Formvorrichtung, bei der innerhalb desselben Formwerkzeugs ein Plattenrohling verformt und mittels Kunststoff hinterspritzt wird, um ein Verbundbauteil herzustellen. Ähnlicher Stand der Technik ist in der DE 10 2011 014 989 A1 und der GB 1 544 917 A beschrieben.

Die EP 0 547 703 A1 beschreibt ein Werkzeug und ein Verfahren zum Herstellen eines Verbundbauteils, das einen Sandwich-Aufbau mit zwei Deckschichten und einem Schaumkern aufweist. Eine Unterform 33 zum Formen des Verbundbauteils wird zwischen einer Vorformungsstation und einer Spritzgussstation mehrfach hin- und hertransportiert, um nacheinander die Deckschichten zu formen, den Schaumkern anzuformen und das Verbundbauteil auszuhärten.

Ein Nachteil des Standes der Technik ist, dass zwischen der Heizeinrichtung zum Aufheizen der Plattenrohlinge und dem Press-Spritzgieß-Werkzeug häufig relativ weite Wege durch entsprechende Transfer-Einrichtungen überbrückt werden müssen. Dadurch entsteht nicht nur ein erheblicher Aufwand für die Bereitstellung der Transfer-Einrichtung, sondern dies birgt auch die Gefahr, dass die vorgewärmten Plattenrohlinge während des Transports abkühlen und dann in dem Press-Spritzgieß-Werkzeug nicht mehr die erforderliche Temperatur haben. Dem könnte zwar entgegengewirkt werden, indem die Plattenrohlinge auf eine höhere Temperatur vorgewärmt werden, dies erfordert jedoch naturgemäß einen höheren Energieaufwand und kann abhängig vom Material des Plattenrohlings sogar zu einer Beeinträchtigung der Materialqualität führen. Andererseits können die Heizplatten der Heizpresse, zwischen denen der Plattenrohling zu liegen kommt, und die Formteile des Spritzgieß-Werkzeugs nicht beliebig nahe nebeneinander angeordnet werden, weil jedes Werkzeug selbst einen gewissen Raum in Anspruch nimmt und für seine Bedienung und Wartung zugänglich sein muss.

Es ist eine Aufgabe der Erfindung, eine Vorrichtung und ein Verfahren zur Herstellung eines Verbundteils, das eine geformte Platte und wenigstens ein an die geformte Platte angeformtes Kunststoff-Funktionsteil aufweist, anzugeben, mit dem die oben geschilderten Nachteile überwinden werden können.

Diese Aufgabe wird durch eine Vorrichtung gemäß Patentanspruch 1 sowie durch ein Verfahren gemäß Patentanspruch 7 gelöst. Bevorzugte Ausführungen der Erfindung sind in den abhängigen Ansprüchen angegeben.

### ÜBERBLICK ÜBER DIE ERFINDUNG

Die Erfindung sieht eine Vorrichtung zum Herstellen eines Verbundteils, das eine geformte Platte und wenigstens ein an die Platte angeformtes Kunststoff-Funktionsteil aufweist, vor. Die Vorrichtung umfasst eine Heizeinrichtung zum Erwärmen eines Plattenrohlings, ein Formwerkzeug mit wenigstens zwei Formelementen zum Aufnehmen und Formen des Plattenrohlings, um den Plattenrohling in eine gewünschte Form zu bringen und somit die geformte Platte herzustellen, und Mittel zum Einbringen einer Formmasse in das Formwerkzeug und zum Anformen des Kunststoff-Funktionsteils an die geformte Platte in dem Formwerkzeug, um das Verbundteil herzustellen. Das Formwerkzeug ist zu diesem Zweck so ausgebildet, dass nach dem Formen des Plattenrohlings wenigstens eine Kavität verbleibt, in der das Kunststoff-Funktionsteil geformt wird. Die Vorrichtung umfasst ferner eine Schließeinheit zum Öffnen und Schließen des Formwerkzeugs, wobei die Heizeinrichtung in die Schließeinheit integriert ist. Die Schließeinheit für das Formwerkzeug ist so eingerichtet, dass sie auch die Heizeinrichtung öffnen und schließen kann. Erfindungsgemäß wird somit der Hub zum Öffnen und Schließen des Formwerkzeugs auch dazu verwendet, die Heizeinrichtung zu öffnen und zu schließen. Die Erfindung sieht somit für das Erwärmen des Plattenrohlings und für das Verformen des Plattenrohlings und das Anspritzen der Funktionsteile nicht zwei getrennte Werkzeuge vor, wie der Stand der Technik, sondern die Heizeinrichtung wird in das Press-Spritzgieß-Werkzeug integriert. Dadurch können die Teile der Heizeinrichtung, zwischen denen der Plattenrohling zu liegen kommt, nahe bei dem Formwerkzeug angeordnet werden, und der Transferweg von der Heizeinrichtung zur Form/Spritz-Einrichtung wird auf ein Minimum reduziert. Ein weiterer Vorteil der Erfindung ist, dass eine separate Heizpresse, einschließlich des notwendigen Hubmechanismus entfallen kann. Ferner ist es auch nicht notwendig, die Heizpresse und die Press-Spritzgieß-Maschine elektrisch zu koppeln, um den Betrieb der beiden Maschinen aufeinander abzustimmen. Dies wird im Stand der Technik in der Regel durch eine entsprechende übergeordnete Steuerung realisiert, die bei der Erfindung entfallen kann.

Durch die Erfindung ergibt sich eine erhebliche Kosteneinsparung schon für die Herstellung des Werkzeugs, weil die Schließeinheit des Press-Spritzgieß-Werkzeugs auch für die Heizeinrichtung zum Vorwärmen des Plattenrohlings genutzt werden kann. Darüber hinaus entfallen weite Wege für den Transfer des vorgewärmten Plattenrohlings zum Formwerkzeug, wodurch die entsprechenden Handling-Einrichtungen einfacher werden können. Der vorgewärmte Plattenrohling verliert deutlich weniger Temperatur als bei langen Transferwegen, was sich insbesondere bei dünnen und leichten Fasermatten bemerkbar macht. Durch den kürzeren Weg wird auch die Zykluszeit verkürzt, weil der aufgeheizte Plattenrohling in unmittelbarer Nähe der Stelle entnommen werden kann, wo er in dem Press-Spritzgieß-Werkzeug weiter verarbeitet wird.

Gemäß einer zweckmäßigen Ausgestaltung der Erfindung sind die Heizeinrichtung und die Formelemente innerhalb der Schließeinheit thermisch voneinander isoliert. Werden beispielsweise Faserverbundmatten zu dem Verbundteil verarbeitet, so werden diese in der Praxis auf eine Temperatur der Größenordnung von 200° C oder mehr vorgewärmt, während das Spritzgieβ-Werkzeug auf eine Temperatur im Bereich von z. B. 40° C bis 80° C temperiert wird. Die Temperatur der eingespritzten Kunststoffmasse kann beispielsweise im Bereich von 200° C oder darüber liegen und wird beim Aushärten der angeformten Kunststoffteile über das Formwerkzeug abgeführt. Im Verhältnis zur Temperatur der Spritzgießmasse muss das Formwerkzeug somit sogar gekühlt werden. Um eine kontrollierte Steuerung sowohl des Vorwärmens als auch des Verformens des Plattenrohlings und des Anspritzens des Kunststoff-Funktionsteile zu ermöglichen, ist daher die thermische Isolierung zwischen Heizeinrichtung und Formelementen zweckmäßig.

In einer Ausgestaltung der Erfindung ist die Vorrichtung als ein Spritzgieß-Werkzeug mit zwei Werkzeughälften ausgebildet, wobei jeweils ein Formelement und ein Teil der Heizeinrichtung in einer Werkzeughälfte nebeneinander liegen und die beiden Werkzeughälften einander gegenüber liegen und mittels der Schließeinheit relativ zueinander bewegt werden, um das Formwerkzeug und die Heizeinrichtung mit demselben Hub zu öffnen oder zu schließen. Die beiden Teile der Heizeinrichtung können jeweils aktive, Wärme abgebende Komponenten umfassen, oder die Heizeinrichtung kann derart auf die Werkzeughälften verteilt sein, dass nur in einer Werkzeughälfte aktive, Wärme abgebende Komponenten vorhanden sind und die andere Werkzeughälfte nur eine Kontaktplatte, Wärmeisolation oder Dergleichen umfasst, die mir der Heizung zusammenwirkt, aber nicht selbst Wärme erzeugt.

In den Ausgestaltungen können die jeweiligen Werkzeughälften oder Werkzeugteile vertikal übereinander oder in horizontaler Richtung nebeneinander liegen. Die Erfindung ist auf keine spezielle Ausrichtung der Werkzeugteile in horizontaler oder vertikaler oder anderer Richtung begrenzt. Die Heizeinrichtung kann sowohl auf der Auswerferseite als auch auf der Düsenseite des Formwerkzeugs oder neben dem Formwerkzeugs angeordnet sein. Es ist auch möglich, dass die Werkzeughälften bzw. Werkzeugteile zum Aufnehmen mehrerer Formwerkzeuge und/oder Heizeinrichtungen ausgelegt sind, wenn mehrere kleinere Verbundteile gleichzeitig gefertigt werden.

Das Formwerkzeug der erfindungsgemäßen Vorrichtung ist grundsätzlich dazu eingerichtet, den Plattenrohling zu verformen und eine oder mehrere Kunststoff-Funktionsteile an den geformten Plattenrohling anzuformen. In der Praxis wird das Kunststoff-Funktionsteil an die geformte Platte angespritzt, angegossen oder angeschäumt. Insofern kann das Formwerkzeug auch als ein Press-Spritzgieß-Werkzeug oder kurz als Spritzgieß-Werkzeug bezeichnet werden, wobei im Kontext der vorliegenden Erfindung das Spritzgießen auch beispielsweise das Anschäumen von Funktionsteilen umfasst.

Das Formwerkzeug kann ferner dazu eingerichtet sein, ein Deckmaterial aufzunehmen, um dieses beim Formen des Plattenrohlings in dem Formwerkzeug mit der geformten Platte zu verbinden. Ferner kann in einigen Ausgestaltungen eine Schneidvorrichtung zum Beschneiden der geformten Platte in das Formwerkzeug integriert sein. Dadurch wird das Werkzeug noch flexibler einsetzbar. Innerhalb desselben Verarbeitungsschrittes kann nicht nur die geformte Platte erstellt werden, sondern es kann gleichzeitig eine hochwertige Oberfläche auf das Verbundteil aufgebracht und der Zuschnitt des Verbundteils bewerkstelligt werden. Beispiele für Deckmaterialien sind Dekore aus Folien, Nadelvliese, Gewebe, Rundstrickware und Tuftware mit oder ohne Kaschieraufbauten, wie Vliese und Schäume.

Die erfindungsgemäße Vorrichtung kann ferner eine Greifereinrichtung umfassen, um einen Plattenrohling in die Heizeinrichtung zu legen, einen erwärmten Plattenrohling aus der Heizeinrichtung zu entnehmen und in das Formwerkzeug einzulegen, und um das fertige Verbundteil aus dem Formwerkzeug zu entnehmen. In einer vorteilhaften Ausbildung ist die Greifereinrichtung so gestaltet, dass sie ein fertiges Verbundteil entnehmen und halten kann, während sie einen erwärmten Plattenrohling aus der Heizeinrichtung entnimmt und in das Formwerkzeug einlegt und/oder während sie einen neuen Plattenrohling in die Heizeinrichtung eingelegt. Dadurch können Zykluszeiten minimiert werden, weil das fertige Verbundteil erst dann abgelegt werden muss, wenn die Vorrichtung wieder bestückt und geschlossen ist. Die Zeit zum Erwärmen und Formen des Plattenrohlings kann dann genutzt werden, das zuletzt gefertigte Verbundteil zu einer entsprechenden Annahmestelle zu transportieren und dort abzulegen.

Die Erfindung sieht auch ein Verfahren zur Herstellung eines Verbundteils der oben beschriebenen Art vor. Bei dem Verfahren werden grundsätzlich die folgenden Verfahrensschritte durchgeführt: Einlegen des Plattenrohlings in eine Heizeinrichtung und Schließen der Heizeinrichtung; Erwärmen eines Plattenrohlings in der Heizeinrichtung; Öffnen der Heizeinrichtung und Entnehmen des erwärmten Plattenrohlings aus der Heizeinrichtung; Einlegen des erwärmten Plattenrohlings in ein Formwerkzeug und Schließen des Formwerkzeugs, um den Plattenrohling in eine gewünschte Form zu bringen und somit die geformte Platte herzustellen; Anformen des Kunststoff-Funktionsteils an die geformte Platte in dem Formwerkzeug, um das Verbundteil herzustellen; und Öffnen des Formwerkzeugs und Entnehmen des Verbundteils aus dem Formwerkzeug. Erfindungsgemäß wird die Heizeinrichtung durch den Hub zum Öffnen und Schließen des Formwerkzeugs geöffnet und geschlossen.

In einer Ausgestaltung der Erfindung werden Formwerkzeug und Heizeinrichtung synchron geöffnet, um ein fertiges Verbundteil aus dem Formwerkzeug zu entnehmen, einen erwärmten Plattenrohling aus der Heizeinrichtung zu entnehmen und in das Formwerkzeug einzulegen und einen neuen Plattenrohling in die Heizeinrichtung einzulegen. Dann werden Formwerkzeug und Heizeinrichtung synchron geschlossen, um den erwärmten Plattenrohling zu formen und das Funktionsteil anzuspritzen und um den neuen Plattenrohling zu erwärmen. Diese Sequenz kann dann entsprechend fortgesetzt werden. Mit anderen Worten werden Formwerkzeug und Heizeinrichtung mit demselben Hub geöffnet und geschlossen. In einer zweckmäßigen Ausgestaltung liegen die Formelemente und die Heizeinrichtung in den Werkzeughälften eines Spritzgieß-Werkzeugs nebeneinander. Die beiden Werkzeughälften, die einander gegenüber liegen, werden mittels der Schließeinheit relativ zueinander bewegt, um das Formwerkzeug und die Heizeinrichtung mit demselben Hub zu öffnen oder zu schließen. Man wird verstehen, dass es ausreichend ist, den aktiven, also Wärme abgebende Teil der Heizeinrichtung in nur einer der beiden Werkzeughälften vorzusehen, so dass die gegenüberliegende Werkzeughälfte z.B. nur eine Kontaktplatte, Wärmeisolation oder dergleichen aufweist, die mit der Heizung zusammenwirkt. Es können aber auch in beiden Werkzeughälften aktive, Wärme abgebende Komponenten angeordnet sein.

### KURZBESCHREIBUNG DER ZEICHNUNGEN

Die Erfindung ist im Folgenden anhand bevorzugter Ausführungen mit Bezug auf die Zeichnungen näher erläutert. In den Figuren zeigen:
- Fig. 1: eine Draufsicht auf eine Werkzeughälfte einer erfindungsgemäßen Vorrichtung, in der ein Teil der Heizeinrichtung und ein Formelement nebeneinander liegen; und
- Fig. 2: eine Schnittdarstellung durch das Werkzeug der Fig. 1 entlang der Linie A-A.

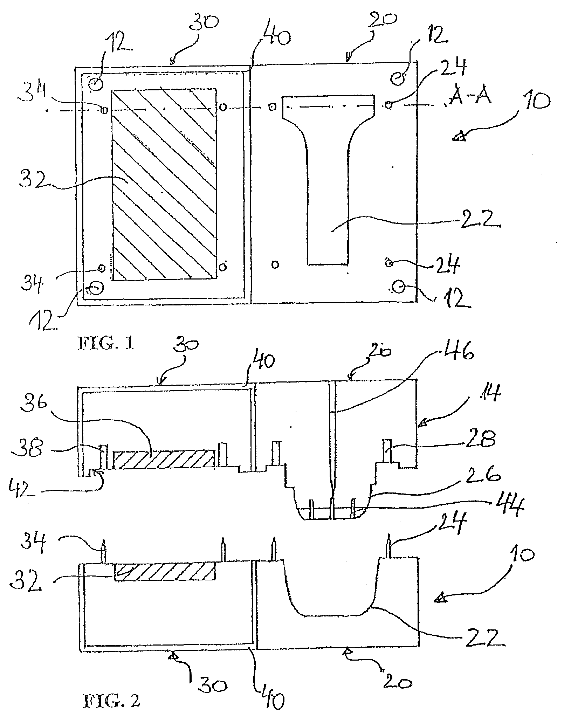

Fig. 1 zeigt eine Draufsicht auf eine Werkzeughälfte oder Aufspannplatte 10 der erfindungsgemäßen Vorrichtung zur Herstellung eines Verbundteils. Die Werkzeughälfte 10 kann, wie in Spritzgießmaschinen üblich, ein Gusskörper aus Eisen sein und weist einen Bereich 20 für das Formwerkzeug sowie einen Bereich 30 für die Heizeinrichtung auf. Der Bereich 20 weist eine Prägefläche 22 auf, die so gestaltet ist, dass ein Plattenrohling (nicht gezeigt), der in das Werkzeug eingelegt wird, beim Zusammenpressen der Prägefläche 22 mit einem Gegenstück (s. Fig. 2) die gewünschte Form der geformten Platte annimmt.

In dem Bereich 30 ist eine Heizplatte 32 angeordnet, die einen Teil einer Kontaktheizung bildet, um einen Plattenrohling (nicht gezeigt) vorzuwärmen. Die Heizplatte 32 kann beispielsweise mittels elektrischer Heizdrähte oder Thermoöl kontrolliert auf eine vorgegebene Temperatur gebracht werden. Die Erfindung ist nicht auf eine Kontaktheizung begrenzt, und zum Erwärmen des Plattenrohlings könnte beispielsweise auch eine Strahlungsheizung eingesetzt werden, die Infrarot-Strahlung einsetzt.

In der gezeigten Ausführung ist der Bereich 30 für die Heizeinrichtung gegenüber dem Bereich 20 für das Formwerkzeug thermisch isoliert, indem der gesamte Werkzeugteil eine thermische Isolierung 40, z.B. in Form von Isolierplatten aufweist. Anstelle der thermischen Isolierung des gesamten Bereichs 30 könnte auch vorgesehen sein, nur die Heizeinrichtung oder Heizplatte selbst zu isolieren.

In der Draufsicht der Fig. 1 sind ferner Haltestifte 24, 34 angedeutet, auf denen der Plattenrohling fixiert werden kann. Diese Stifte 24, 34 sind in der Darstellung der Fig. 2 besser zu erkennen.

Schließlich zeigt die Draufsicht der Fig. 1 Durchgangsbohrungen 12 in den Ecken der Werkzeughälfte 10, die dazu dienen, die Werkzeughälfte 10 an einer Schließeinheit (nicht gezeigt) zu fixieren, um das Werkzeug öffnen und schließen zu können.

Die Werkzeughälfte 10 ist mit ihrem Gegenstück 14 (zweite Werkzeughälfte oder Aufspannplatte) auch in der Schnittdarstellung der Fig. 2 dargestellt. Die Schnittebene verläuft entlang der Linie A-A in Fig. 1.

Auch die zweite Werkzeughälfte 14 ist in einen Bereich 20 für das Formwerkzeug und einen Bereich 30 für die Heizeinrichtung aufgeteilt, wobei auch hier die Bereiche 20, 30 durch eine thermische Isolierung 40 getrennt sind. Auch die zweite Werkzeughälfte 14 weist in dem Bereich 30 für die Heizeinrichtung eine Heizplatte (zweite Heizplatte) 36 auf, die ein Gegenstück zu der ersten Heizplatte 32 bildet. Die erste und die zweite Heizplatten 32, 36 bilden gemeinsam eine Kontaktheizung. Anstelle von zwei Heizplatten ist es auch möglich, nur eine Heizplatte und eine gegenüberliegende Kontaktplatte vorzusehen, die mit der Heizplatte zusammenwirkt. In anderen Ausgestaltungen kann die Heizeinrichtung auch durch Wärmestrahler, z. B. Infrarot-Strahler, und einen gegenüberliegenden Reflektor, eine Wärmeisolation oder Dergleichen gebildet werden.

Im Bereich 30 der zweiten Werkzeughälfte 14 sind ferner Bohrungen 38 ausgebildet, welche die Haltestifte 34 aufnehmen, wenn die beiden Werkzeughälften zusammengefügt werden. Ferner ist in Fig. 2 zu erkennen, dass in der Oberfläche der zweiten Werkzeughälfte 14 in dem Bereich 30 ein Absatz 42 gebildet ist, der dazu dient, den Plattenrohling (nicht gezeigt) aufzunehmen. Mit Hilfe dieses Absatzes 42 kann bei geschlossenen Werkzeughälften 10, 14 ein Spaltmaß eingestellt und somit der Plattenrohling auf eine vorgegebene Stärke vorverdichtet werden.

In dem Bereich 20 für das Formwerkzeug weist auch die zweite Werkzeughälfte 14 eine Prägefläche 26 auf, die gemeinsam mit der Prägefläche 22 der ersten Werkzeughälfte 10 die Gestalt der geformten Platte (nicht gezeigt) bestimmt. Bohrungen 28 zum Aufnehmen der Haltestifte 24, wenn die beiden Werkzeughälften 10 und 14 zusammengebracht werden, sind beidseits der Prägefläche 26 vorgesehen. Das Formwerkzeug kann ferner so gestaltet sein, dass zusätzlich zu dem Plattenrohling ein Deckmaterial aufgenommen und in der Formwerkzeug fixiert werden kann, wobei das Deckmaterial z.B. ein Oberflächendekor oder eine Verstärkung der geformten Platte bildet.

Zum Anspritzen der Funktionsteile weist die zweite Werkzeughälfte 14 in dem Bereich 20 für das Formwerkzeug Einspritzdüsen 44 sowie einen Kanal 46 zum Zuführen einer Kunststoffschmelze auf. Die Prägeflächen 22, 26 sind so ausgebildet, dass nach dem Schließen der Werkzeughälften 10, 14 und dem Pressen und Verformen des Plattenrohlings (nicht gezeigt) in dem Formwerkzeug wenigstens eine Kavität verbleibt, welche die zu formenden Kunststoff-Funktionsteile definiert. In dieser Hinsicht kann das Formwerkzeug grundsätzlich wie eine an sich bekannte Press-Spritzgieß-Maschine ausgebildet sein. Die Spritzeinheit (nicht gezeigt) kann dazu ausgelegt werden, Thermoplaste, Duroplaste oder Elastomere durch Spritzgießen in die Kavität einzubringen. Es ist auch möglich, geschäumte Funktionsteile an die geformte Platte anzuformen, wobei dann in der Kavität auch die Reaktion des Materials zum Aufschäumen stattfinden muss. Die Spritzeinheit verfügt neben Einspritzdrüsen 44 und dem Kanal 46 für die Kunststoffschmelze daher über Fördereinrichtungen, wie Förderschnecken, Dosiereinrichtungen, einer Rückstromsperre und dergleichen, wobei all dies aus dem Stand der Technik bekannt ist.

Auch die zweite Werkzeughälfte 14 weist Durchgangsbohrungen zur Verbindung mit einer Schließeinheit auf (in Fig. 2 nicht gezeigt). Die Schließeinheit (nicht gezeigt) besteht aus mehreren Platten, die auf einem Maschinenrahmen senkrecht oder vertikal in einer Achse angeordnet sind. Eine feste Aufspannplatte trägt in der Regel eine Hälfte des Werkzeuges, dass mit der Spritzeinheit gekoppelt ist; und eine zweite Platte ist als bewegliche Aufspannplatte vorgesehen. An ihr ist die zweite Werkzeughälfte montiert, die in der Regel der Auswerfcrseite entspricht. Diese zweite Platte ist beweglich und wird z. B. mechanisch oder hydralisch in Richtung der festen Aufspannplatte geschoben. Häufig ist noch eine dritte Platte vorgesehen, nämlich eine Stirnplatte, die eine abstützende Funktion zum Kraftaufbau und zum Schließen der Aufspannplatten hat. Für kompliziertere Gestaltungen des Formteils können ferner Schieber im Werkzeug vorgesehen werden, um Hinterschneidung anfertigen zu können. All dies ist aus dem Stand der Technik bekannt. Sofern Teile eingelegt oder angespritzt werden, wie bei der Erfindung, kommen in der Regel Vertikalmaschinen zum Einsatz.

Die erfindungsgemäßen Vorrichtungen können wie folgt benutzt werden:
In der Ausgestaltung der Figuren 1 und 2 werden gleichzeitig ein neuer Plattenrohling und ein vorgewärmter Plattenrohling die Bereiche 30 und 20 in die erste Werkzeughälfte 10 eingebracht, wobei sie durch die Haltestifte 34, 24 positioniert und fixiert werden. Optional kann zusätzlich zu dem Plattenrohling ein Deckmaterial in das Formwerkzeug eingelegt und darin fixiert werden, um während des Formprozesses, in einem Arbeitsschritt, eine Deckschicht an der geformten Platte anzubringen. Anschließend werden die beiden Werkzeughälften 10, 14 geschlossen, wobei die zweite Werkzeughälfte auf der Düsenseite in der Regel feststehend und die andere Werkzeughälfte 10 verfahrbar sein wird. Nach dem Schließen der Werkzeughälften wird der neue Plattenrohling in dem Bereich 30 vorverdichtet und erwärmt, während der vorgewärmte Plattenrohling in dem Bereich 20 in die gewünschte Form gebracht wird und Kunststoff-Funktionsteile angespritzt werden. Diese beiden Vorgänge sollten so aufeinander abgestimmt werden, dass sie gleichzeitig abgeschlossen sind. Anschließend werden die beiden Werkzeughälften 10, 14 geöffnet, und das fertige Formteil kann aus dem Bereich 20 entnommen werden, die vorgewärmte Platte wird von dem Bereich 30 in den Bereich 20 umgesetzt, und ein neuer Plattenrohling wird im Bereich 30 eingelegt. Vor der Entnahme der geformten Platte kann diese optional noch in dem Formwerkzeug zugeschnitten werden. Hierfür kein eine (nicht gezeigte) Schneideinrichtung an dem Werkzeug vorgesehen sein. Für das Handling der Plattenrohlinge und fertigen Formteile kann eine Greifer-Einrichtung (nicht angezeigt) verwendet werden, die für das Umsetzten des vorgewärmten Plattenrohlings aus dem Bereich 30 in den Bereich 20 nur eine sehr kurze Strecke überbrücken muss, sodass diese Bewegung schnell abgeschlossen wird und der Plattenrohling während des Transfers nicht oder nicht nennenswert abkühlt. Andererseits kann die Zeit, während das Werkzeug geschlossen ist, um den Plattenrohling vorzuwärmen, zu formen und die Funktionsteile anzuspritzen, genutzt werden, um das fertige Verbundteil abzulegen und einen neuen Plattenrohling unmittelbar neben dem Werkzeug bereitzustellen. Dadurch können die Zykluszeiten des Fertigungsverfahrens verkürzt werden.

Verbundbauteile, die mit der erfindungsgemäßen Vorrichtung und dem Verfahren hergestellt werden können, können eine Platte aus einem Faserverbundmaterial aufweisen, welche Naturfasern, Kunststofffasern, Glasfasern, Holzfasern und dergleichen erhalten. Die Fasern können thermoplastisch gebunden sein. Es ist aber auch möglich, das Verbundteil aus Kunststoffplatten ohne Faseranteil herzustellen oder ein Sandwich-Material zu verwenden. Die angespritzten Kunststoffteile können aus allen gängigen Kunststoffen, wie PP, PPE, PA, hergestellt werden und bilden z. B. Rippen, Halteeinrichtungen, Verstärkungs- oder Befestigungselemente, um nur einige Beispiele zu nennen. Die Heizplatten werden beispielsweise auf Temperaturen in der Größenordnung von 200° C oder darüber erwärmt, je nach verwendeten Materialien. Auch die Werkzeughälften für das Formwerkzeug werden temperiert, z. B. auf eine Temperatur im Bereich von 40° C bis 80° C, um die eingespritzte Kunststoffmasse kontrolliert abzukühlen.

## Patentansprüche

1. Vorrichtung zur Herstellung eines Verbundteils, das eine geformte Platte und wenigstens ein an die geformte Platte angeformtes Kunststoff-Funktionsteil aufweist, welche umfasst:
eine Heizeinrichtung (32, 36; 76, 80) zum Erwärmen eines Plattenrohlings;
ein Formwerkzeug (22, 26; 62, 72) mit wenigstens zwei Formelementen und zum Aufnehmen und Verformen des Plattenrohlings, um den Plattenrohling in eine gewünschte Form zu bringen und somit die geformte Platte herzustellen;
Mittel (44, 46; 64, 66) zum Einbringen einer Formmasse in das Formwerkzeug (22, 26; 62, 72) zum Anformen des Kunststoff-Funktionsteils an die geformte Platte in dem Formwerkzeug (22, 26; 62, 72), um das Verbundteil herzustellen,
wobei das Formwerkzeug (22, 26; 62, 72) so ausgebildet ist, dass nach dem Verformen des Plattenrohlings eine Kavität verbleibt; und
eine Schließeinheit zum Öffnen und Schließen des Formwerkzeugs (22, 26; 62, 72); wobei die Heizeinrichtung (32, 36; 76, 80) in die Schließeinheit integriert ist und die Schließeinheit dazu eingerichtet ist, die Heizeinrichtung (32, 36; 76, 80) zu öffnen und zu schließen,
wobei die Vorrichtung als ein Press-Spritzgieß-Werkzeug mit zwei Werkzeughälften (10, 14) ausgebildet ist, wobei jeweils ein Formelement (22, 26; 62, 72) und ein Teil der Heizeinrichtung (32, 36; 76, 80) in einer Werkzeughälfte (10, 14) nebeneinander liegen und die Werkzeughälften (10, 14) mittels der Schließeinheit relativ zueinander bewegbar sind, um das Formwerkzeug (22, 26; 62, 72) und die Heizeinrichtung (32, 36; 76, 80) mit demselben Hub zu öffnen oder zu schließen.

2. Vorrichtung nach Anspruch 1, wobei die Heizeinrichtung (32, 36; 76, 80) und die Formelemente (22, 26; 62, 72) innerhalb der Schließeinheit thermisch voneinander isoliert sind.

3. Vorrichtung nach einem der vorangehenden Ansprüche, wobei die Mittel (44, 46, 64, 66) zum Einbringen der Formmasse in das Formwerkzeug (22, 26; 62, 72) und die Kavität in dem Formwerkzeug (22, 26; 62, 72) dazu eingerichtet sind, das Kunststoff-Funktionsteil an die geformte Platte anzuspritzen, anzugießen oder anzuschäumen.

4. Vorrichtung nach einem der vorangehenden Ansprüche, wobei das Formwerkzeug dazu eingerichtet ist, ein Deckmaterial aufzunehmen, das beim Verformen des Plattenrohlings in dem Formwerkzeug mit der geformten Platte verbunden wird.

5. Vorrichtung nach einem der vorangehenden Ansprüche, mit ferner einer Schneidvorrichtung zum Beschneiden der geformten Platte in dem Formwerkzeug.

6. Vorrichtung nach einem der vorangehenden Ansprüche mit einer Greifereinrichtung zum Einlegen eines Plattenrohlings in die Heizeinrichtung (32, 36; 76, 80), zum Entnehmen eines erwärmten Plattenrohlings aus der Heizeinrichtung (32, 36; 76, 80) und Einlegen des erwärmten Plattenrohlings in das Formwerkzeug (22, 26; 62, 72) und zum Entnehmen des fertigen Verbundteils aus dem Formwerkzeug (22, 26; 62, 72), wobei die Greifereinrichtung dazu eingerichtet ist, ein fertiges Verbundteil zu entnehmen und zu halten, während sie einen erwärmten Plattenrohling aus der Heizeinrichtung (32, 36; 76, 80) entnimmt und in das Formwerkzeug (22, 26; 62, 72) einlegt und/oder während sie einen neuen Plattenrohling in die Heizeinrichtung (32, 36; 76, 80) einlegt.

7. Verfahren zur Herstellung eines Verbundteils, das eine geformte Platte und wenigstens ein an die geformte Platte angeformtes Kunststoff-Funktionsteil aufweist, mit den Verfahrensschritten:
Einlegen des Plattenrohlings in eine Heizeinrichtung (32, 36; 76, 80) und Schließen der Heizeinrichtung (32, 36; 76, 80);
Erwärmen des Plattenrohlings in der Heizeinrichtung (32, 36; 76, 80);
Öffnen der Heizeinrichtung (32, 36; 76, 80) und Entnehmen des erwärmten Plattenrohlings aus der Heizeinrichtung (32, 36; 76, 80);
Einlegen des erwärmten Plattenrohlings in ein Formwerkzeug (22, 26; 62, 72) und
Schließen des Formwerkzeugs (22, 26; 62, 72), um den Plattenrohling zu verformen und in eine gewünschte Form zu bringen und somit die geformte Platte herzustellen;
Anformen des Kunststoff-Funktionsteils an die geformte Platte in dem Formwerkzeug (22, 26; 62, 72), um das Verbundteil herzustellen; und
Öffnen des Formwerkzeugs (22, 26; 62, 72) und Entnehmen des Verbundteils aus dem Formwerkzeug (22, 26; 62, 72);
wobei die Heizeinrichtung (32, 36; 76, 80) durch den Hub zum Öffnen und Schließen des Formwerkzeugs (22, 26; 62, 72) geöffnet und geschlossen wird,
wobei das Formwerkzeug (22, 26; 62, 72) und die Heizeinrichtung (32, 36; 76, 80) in ein Press-Spritzguss-Werkzeug mit zwei Werkzeughälften integriert sind und die Werkzeughälften relativ zueinander bewegt werden, um das Formwerkzeug (22, 26; 62, 72) und die Heizeinrichtung (32, 36; 76, 80) mit demselben Hub zu öffnen oder zu schließen.

8. Verfahren nach Anspruch 7, wobei
(a) die Werkzeughälften bzw. Werkzeugteile und somit das Formwerkzeug (22, 26; 62, 72) und die Heizeinrichtung (32, 36; 76, 80) synchron geöffnet werden,
(b) wenn ein fertiges Verbundteil aus dem Formwerkzeug (22, 26; 62, 72) entnommen wird, ein erwärmter Plattenrohling aus der Heizeinrichtung (32, 36; 76, 80) entnommen und in das Formwerkzeug (22, 26; 62, 72) eingelegt wird und ein neuer Plattenrohling in die Heizeinrichtung (32, 36; 76, 80) eingelegt wird;
(c) die Werkzeughälften bzw. Werkzeugteile und somit das Formwerkzeug (22, 26; 62, 72) und die Heizeinrichtung (32, 36; 76, 80) synchron geschlossen werden;
(d) der erwärmte Plattenrohling verformt und das Funktionsteil angespritzt wird und der neue Plattenrohling erwärmt wird; und
anschließend die Fertigungssequenz bei (a) fortgesetzt wird.

9. Verfahren nach Anspruch 7 oder 8, wobei auch ein Deckmaterial in das Formwerkzeug eingelegt wird und das Deckmaterial beim Verformen des Plattenrohlings in dem Formwerkzeug mit der geformten Platte verbunden wird.

10. Verfahren nach einem der Ansprüche 7 bis 9, wobei die geformten Platte in dem Formwerkzeug beschnitten wird, bevor sie aus dem Formwerkzeug entnommen wird.

## Claims

1. Device for manufacture of a composite piece, which exhibits a shaped plate and at least one plastic functional piece molded on to the shaped plate, comprising:
a heater (32, 36; 76, 80) for heating a plate blank;
a shaping tool (22, 26; 62, 72) with at least two shaping elements and for receiving and
shaping of the plate blank, to bring the plate blank into a desired shape and thus to manufacture the shaped plate;
means (44, 46; 64, 66) for insertion of a molding material into the shaping tool (22, 26; 62, 72) for molding the plastic functional piece onto the shaped plate in the shaping tool (22, 26; 62, 72) to manufacture the composite piece,
wherein the shaping tool (22, 26; 62, 72) is so configured that after the shaping of the plate blank, at least one cavity remains; and
a closing unit for opening and closing the shaping tool (22, 26; 62, 72);
wherein the heater (32, 36; 76, 80) is integrated into the closing unit and the closing unit is configured to open and close the heater (32, 36; 76, 80);
wherein the device is configured as an injection-molding tool with two tool halves (10, 14), wherein a shaping element (22, 26; 62, 72) and a part of the heater (32, 36; 76, 80) lie next to each other in a tool half 10, 14 and the tool halves (10, 14) are able to move via the closing unit relative to each other, to open or close the shaping tool (22, 26; 62, 72) and the heater (32, 36; 76, 80) with the same stroke..

2. Device according to claim 1, wherein the heating device (32, 36; 76, 80) and the shaping elements (22, 26; 62, 72) are thermally insulated from each other within the closing unit.

3. Device according to one of the preceding claims, wherein the means (44, 56, 64, 66) for insertion of the molding material into the shaping tool (22, 26; 62, 72) and the cavity in the shaping tool (22, 26; 62, 72) are configured to mold, cast or foam-apply the plastic functional piece onto the shaped plate.

4. Device according to one of the preceding claims, wherein the shaping tool is configured to receive a cover material which, when shaping the plate blank in the shaping tool, is bonded to the shaped plate.

5. Device according to one of the preceding claims, further comprising a cutting device in the shaping tool for cutting the shaped plate.

6. Device according to one of the preceding claims with a gripper device for insertion of a plate blank into the heater (32, 36; 76, 80), for removal of a heated plate blank from the heater (32, 36; 76, 80) and for insertion of the heated plate blank into the shaping tool (22, 26; 62, 72) and for removal of the completed composite piece from the shaping tool (22, 26; 62, 72), wherein the gripper device is configured to remove a completed composite piece and to remove and hold it, while it removes a heated plate blank from the heater (32, 36; 76, 80) and inserts it into the shaping tool (22, 26; 62, 72) and/or while it is inserting a new plate blank into the heater (32, 36; 76, 80).

7. Method for manufacture of a composite piece, which exhibits a shaped plate and at least one plastic functional piece shaped onto the shaped plate, including the steps:
insertion of the plate blank into a heater (32, 36; 76, 80) and closing of the heater (32, 36; 76, 80);
heating of the plate blank in the heater (32, 36; 76, 80);
opening of the heater (32, 36; 76, 80) and removal of the heated plate blank from the heater (32, 36; 76, 80);
insertion of the heated plate blank into a shaping tool (22, 26; 62, 72) and closing of the shaped tool (22, 26; 62, 72), to bring the plate blank into a desired shape and thus to manufacture the shaped plate;
molding on of the plastic functional piece onto the shaped plate in the shaping tool (22, 26; 62, 72) to manufacture the composite piece; and
opening of the shaping tool (22, 26; 62, 72) and removal of the composite piece from the shaping tool (22, 26; 62, 72);
wherein the heater (32, 36; 76, 80) is opened and closed by the stroke for opening and
closing of the shaping tool (22, 26; 62, 72);
wherein the shaping tool (22, 26; 62, 72) and the heater (32, 36; 76, 80) are integrated into a press injection-molding tool with two tool halves, and the tool halves are moved relative to each other to open or close the shaping tool (22, 26; 62, 72) and the heating device (32, 36; 76, 80) by the same stroke.

8. Method according to claim 7, wherein
(a) the tool halves or tool parts and thus the shaping tool (22, 26; 62, 72) and the heater (32, 36; 76, 80) are synchronously opened,
(b) when a completed composite piece is removed from the shaping tool (22, 26; 62, 72), a heated plate blank is removed from the heater (32, 36; 76, 80) and inserted into the shaping tool (22, 26; 62, 72), and a new plate blank is inserted into the heater (32, 36; 76, 80);
(c) the tool halves or tool parts, and thus the shaping tool (22, 26; 62, 72) and the heating device (32, 36; 76, 80) are synchronously closed;
(d) the heated plate blank is shaped and the functional piece is molded on and the new plate blank is heated; and
then the manufacturing sequence is continued at (a).

9. The method according to claim 7 or 8 wherein also a cover material is inserted into the shaping tool and the cover material is bonded to the shaped plate when forming the plate blank in the shaping tool.

10. The method according to one of claims 7 to 9, wherein the shaped plate is cut in the shaping tool before it is removed from the shaping tool.

## Revendications

1. Dispositif de fabrication d'une pièce composite qui présente un panneau moulé et au moins une pièce fonctionnelle en matière plastique formée sur le panneau moulé, qui comprend :
un dispositif de chauffage (32, 36 ; 76, 80) pour chauffer une ébauche de panneau ;
un outil de moulage (22, 26 ; 62, 72) avec au moins deux éléments de moulage et pour la réception et le formage de l'ébauche de panneau pour amener l'ébauche de panneau dans une forme souhaitée et fabriquer ainsi le panneau moulé ;
des moyens (44, 46 ; 64, 66) pour la mise en place d'une matière à mouler dans l'outil de moulage (22, 26 ; 62, 72) pour le formage de la pièce fonctionnelle en matière plastique sur le panneau moulé dans l'outil de moulage (22, 26 ; 62, 72) pour fabriquer la pièce composite,
l'outil de moulage (22, 26 ; 62, 72) étant constitué de telle sorte qu'une cavité demeure après le formage de l'ébauche de panneau ; et
une unité de fermeture pour l'ouverture et la fermeture de l'outil de moulage (22, 26 ; 62, 72) ;
le dispositif de chauffage (32, 36 ; 76, 80) étant intégré dans l'unité de fermeture, et l'unité de fermeture étant aménagée pour ouvrir et fermer le dispositif de chauffage (32, 36 ; 76, 80),
le dispositif étant constitué en tant qu'outil de moulage par injection par presse avec deux moitiés d'outil (10, 14), un élément de moulage (22, 26 ; 62, 72) et une partie du dispositif de chauffage (32, 36 ; 76, 80) étant respectivement situés de façon juxtaposée dans une moitié d'outil (10, 14), et les moitiés d'outil (10, 14) étant mobiles l'une par rapport à l'autre au moyen de l'unité de fermeture pour ouvrir ou fermer avec la même course l'outil de moulage (22, 26 ; 62, 72) et le dispositif de chauffage (32, 36 ; 76, 80).

2. Dispositif selon la revendication 1, le dispositif de chauffage (32, 36 ; 76, 80) et les éléments de moulage (22, 26 ; 62, 72) étant isolés thermiquement les uns des autres à l'intérieur de l'unité de fermeture.

3. Dispositif selon l'une des revendications précédentes, les moyens (44, 46 ; 64, 66) destinés à la mise en place de la matière à mouler dans l'outil de moulage (22, 26 ; 62, 72) et la cavité dans l'outil de moulage (22, 26 ; 62, 72) étant aménagés pour injecter, couler ou mousser la pièce fonctionnelle en matière plastique sur le panneau moulé.

4. Dispositif selon l'une des revendications précédentes, l'outil de moulage étant aménagé pour recevoir un matériau de couverture qui, lors du formage de l'ébauche de panneau dans l'outil de moulage, est raccordé au panneau moulé.

5. Dispositif selon l'une des revendications précédentes, avec en plus un dispositif de coupe pour découper le panneau moulé dans l'outil de moulage.

6. Dispositif selon l'une des revendications précédentes, avec un dispositif de grappin pour l'insertion d'une ébauche de panneau dans le dispositif de chauffage (32, 36 ; 76, 80), pour l'enlèvement d'une ébauche de panneau chauffée hors du dispositif de chauffage (32, 36 ; 76, 80) et pour l'insertion de l'ébauche de panneau chauffé dans l'outil de moulage (22, 26 ; 62, 72) et pour l'enlèvement de la pièce composite finie hors de l'outil de moulage (22, 26 ; 62, 72), le dispositif de grappin étant aménagé pour enlever et maintenir une pièce composite finie pendant qu'il enlève une ébauche de panneau chauffée hors du dispositif de chauffage (32, 36 ; 76, 80) et l'insère dans l'outil de moulage (22, 26 ; 62, 72) et/ou pendant qu'il insère une nouvelle ébauche de panneau dans le dispositif de chauffage (32, 36 ; 76, 80).

7. Procédé de fabrication d'une pièce composite qui présente un panneau moulé et au moins une pièce fonctionnelle en matière plastique formée sur le panneau moulé, avec les étapes de procédé suivantes :
insertion de l'ébauche de panneau dans un dispositif de chauffage (32, 36 ; 76, 80) et fermeture du dispositif de chauffage (32, 36 ; 76, 80) ;
chauffage de l'ébauche de panneau dans le dispositif de chauffage (32, 36 ; 76, 80) ;
ouverture du dispositif de chauffage (32, 36 ; 76, 80) et enlèvement de l'ébauche de panneau chauffée hors du dispositif de chauffage (32, 36 ; 76, 80) ;
insertion de l'ébauche de panneau chauffée dans un outil de moulage (22, 26 ; 62, 72) et fermeture de l'outil de moulage (22, 26 ; 62, 72) pour former l'ébauche de panneau et l'amener dans une forme souhaitée et fabriquer ainsi le panneau moulé ;
formage de la pièce fonctionnelle en matière plastique sur le panneau moulé dans l'outil de moulage (22, 26 ; 62, 72) pour fabriquer la pièce composite ; et
ouverture de l'outil de moulage (22, 26 ; 62, 72) et enlèvement de la pièce composite hors de l'outil de moulage (22, 26 ; 62, 72) ;
le dispositif de chauffage (32, 36 ; 76, 80) étant ouvert et fermé par la course d'ouverture et de fermeture de l'outil de moulage (22, 26 ; 62, 72),
l'outil de moulage (22, 26 ; 62, 72) et le dispositif de chauffage (32, 36 ; 76, 80) étant intégrés dans un outil de moulage par injection par presse avec deux moitiés d'outil (10, 14), et les moitiés d'outil (10, 14) étant déplacées l'une par rapport à l'autre pour ouvrir ou fermer avec la même course l'outil de moulage (22, 26 ; 62, 72) et le dispositif de chauffage (32, 36 ; 76, 80).

8. Procédé selon la revendication 7,
(a) les moitiés d'outil ou respectivement les parties d'outil et donc l'outil de moulage (22, 26 ; 62, 72) et le dispositif de chauffage (32, 36 ; 76, 80) étant ouverts de façon synchrone,
(b) quand une pièce composite finie est enlevée de l'outil de moulage (22, 26 ; 62, 72), une ébauche de panneau chauffée est enlevée du dispositif de chauffage (32, 36 ; 76, 80) et insérée dans l'outil de moulage (22, 26 ; 62, 72), et une nouvelle ébauche de panneau est insérée dans le dispositif de chauffage (32, 36 ; 76, 80) ;
(c) les moitiés d'outil ou respectivement les parties d'outil et donc l'outil de moulage (22, 26 ; 62, 72) et le dispositif de chauffage (32, 36 ; 76, 80) sont fermés de façon synchrone ;
(d) l'ébauche de panneau chauffée est formée et la pièce fonctionnelle est injectée et la nouvelle ébauche de panneau est chauffée ; et
ensuite la séquence de production est poursuivie en (a).

9. Procédé selon la revendication 7 ou 8, un matériau de couverture étant également inséré dans l'outil de moulage, et le matériau de couverture étant, lors du formage de l'ébauche de panneau dans l'outil de moulage, raccordé au panneau moulé.

10. Procédé selon l'une des revendications 7 à 9, le panneau moulé étant découpé dans l'outil de moulage avant d'être enlevé de l'outil de moulage.
